(19) Europäisches Patentamt
European Patent Office
Office européen des brevets

(11) EP 4 459 721 A1

(12) EUROPEAN PATENT APPLICATION
published in accordance with Art. 153(4) EPC

(43) Date of publication:
**06.11.2024 Bulletin 2024/45**

(21) Application number: **22915663.3**

(22) Date of filing: **06.12.2022**

(51) International Patent Classification (IPC):
***H01M 4/62*** *(2006.01)* ***C08F 214/22*** *(2006.01)*

(52) Cooperative Patent Classification (CPC):
**C08F 214/22; H01M 4/62;** Y02E 60/10

(86) International application number:
**PCT/JP2022/044955**

(87) International publication number:
**WO 2023/127432 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.12.2021 JP 2021212677**

(71) Applicant: **Kureha Corporation**
**Chuo-ku**
**Tokyo 103-8552 (JP)**

(72) Inventors:
- **TAKAHASHI, Yukihiro**
  **Tokyo 103-8552 (JP)**
- **YAMANE, Takuya**
  **Tokyo 103-8552 (JP)**
- **SAKAI, Yuki**
  **Tokyo 103-8552 (JP)**
- **SUGAHARA, Mayumi**
  **Tokyo 103-8552 (JP)**

(74) Representative: **Zimmermann & Partner Patentanwälte mbB**
**P.O. Box 330 920**
**80069 München (DE)**

# (54) BINDER FOR NON-AQUEOUS ELECTROLYTE SECONDARY BATTERY, ELECTRODE MIXTURE, ELECTRODE, AND BATTERY

(57) An object is to provide a binder for a non-aqueous electrolyte secondary battery that undergoes less deterioration or less viscosity increase in a case where the binder is mixed with an active material containing a large amount of base or the like and that is stable for a long period of time. The binder for a non-aqueous electrolyte secondary battery that solves the issue described above includes a vinylidene fluoride polymer, the vinylidene fluoride polymer containing a structural unit derived from vinylidene fluoride and a structural unit derived from a compound represented by a specific structural formula and having a melting point of 165°C or higher.



Processed by Luminess, 75001 PARIS (FR)

## Description

### [TECHNICAL FIELD]

The present invention relates to a binder for a non-aqueous electrolyte secondary battery, an electrode mixture, an electrode, and a battery.

### [BACKGROUND ART]

A vinylidene fluoride polymer such as polyvinylidene fluoride is often used as a binder (binding agent) for a mixture layer of an electrode of a non-aqueous electrolyte secondary battery. In the mixture layer, the binder adheres an active material and the like and a current collector. Thus, the binder is required to have high adhesiveness to an active material and a current collector.

For example, Patent Document 1 proposes, as a vinylidene fluoride polymer having a high adhesiveness to an active material and a current collector, a copolymer of vinylidene fluoride and a compound represented by the following general formula:

[Chem. 1]

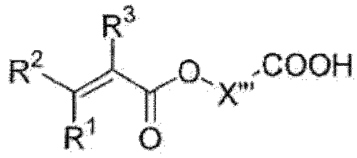

In the above general formula, $R^1$, $R^2$, and $R^3$ each independently represent a hydrogen atom, a chlorine atom, or an alkyl group having 1 or more and 5 or less carbons, and X''' represents an atomic group containing a main chain having 1 or more and 18 or less atoms and having a molecular weight of 456 or less.

[Citation List]

[Patent Document]

Patent Document 1: JP 5797206 B

### [SUMMARY OF INVENTION]

[Technical Problem]

The vinylidene fluoride polymer described in the above Patent Document 1 can achieve a high adhesiveness to an active material and a current collector. However, in recent years, batteries using a positive electrode active material with a high nickel proportion are investigated to increase the capacity of batteries. In general, an active material having a high nickel proportion contains a large amount of base. When such an active material having a high nickel proportion and a known vinylidene fluoride polymer are mixed, the viscosity of the mixture (electrode mixture) may increase, and the mixture may be gelled.

An object of the present invention is to provide a binder for a non-aqueous electrolyte secondary battery that undergoes less deterioration or less viscosity increase in a case where the binder is mixed with an active material containing a large amount of a base or the like and that is stable for a long period of time, an electrode mixture, an electrode, and a battery.

[Solution to Problem]

An embodiment of the present invention provides a binder for a non-aqueous electrolyte secondary battery including a vinylidene fluoride polymer, the vinylidene fluoride polymer containing a structural unit derived from vinylidene fluoride and a structural unit derived from a compound represented by General Formula (1) or (2) and having a melting point of 165°C or higher:

[Chem. 2]

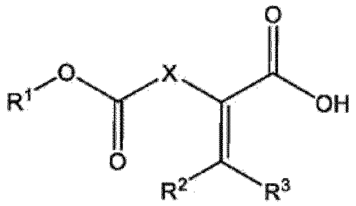

(1)

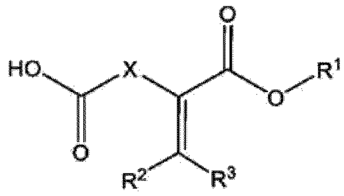

(2)

where in General Formula (1) or (2), $R^1$ represents a hydrogen atom or an alkyl group having 1 or more and 5 or less carbons, and $R^2$ and $R^3$ each independently represent a hydrogen atom, a halogen atom, or an alkyl group having 1 or more and 5 or less carbons, and X represents an alkylene group having 1 or more and 5 or less carbons and optionally having a substituent.

An embodiment of the present invention provides an electrode mixture containing the binder for a non-aqueous electrolyte secondary battery and an active material.

An embodiment of the present invention provides an electrode containing a solidified material of the electrode mixture.

An embodiment of the present invention provides a battery including the electrode.

[Advantageous Effects of Invention]

The binder for a non-aqueous electrolyte secondary battery of an embodiment of the present invention is less likely to cause deterioration or viscosity increase even when mixed with, for example, an active material containing a large amount of base. Thus, an electrode mixture that is stable for a long period of time, an electrode using this, and a battery can be obtained.

[Description of Embodiments]

1. Binder for non-aqueous electrolyte secondary battery

As described above, as a binder for a non-aqueous electrolyte secondary battery (hereinafter, also simply referred to as "binder"), a vinylidene fluoride polymer obtained by copolymerizing vinylidene fluoride and a compound containing a carboxy group, such as mono(acryloyloxyethyl) succinate, has been known, and such a vinylidene fluoride copolymer exhibits a high adhesiveness to a current collector. However, when such a vinylidene fluoride polymer and an active material containing a large amount of base are mixed, the viscosity of the mixture (electrode mixture) may increase, and the mixture may be gelled. Furthermore, as a method for introducing a carboxy group into a vinylidene fluoride polymer, copolymerization of vinylidene fluoride and monomethyl maleate may be considered. However, even for a vinylidene fluoride polymer having a structural unit derived from monomethyl maleate, the viscosity increase or gelation tends to occur when an electrode mixture is prepared.

The reason for this is thought to be as follows. Mono(acryloyloxyethyl) succinate and monomethyl maleate have structures in which a hydrogen is bonded to the carbon of a carbon-carbon double bond to which a carbonyl group is bonded. When such mono(acryloyloxyethyl) succinate and/or monomethyl maleate and vinylidene fluoride are copolymerized, the structural unit derived from the vinylidene fluoride tends to deteriorate. Herein, the "deterioration" means withdrawal of hydrogen by a base, that is, dehydrofluorination, and it is conceived that the viscosity increase and gelation of the electrode mixture occur due to crosslinking of a polyene generated by the dehydrofluorination in the electrode mixture.

Meanwhile, the binder of an embodiment of the present invention contains a vinylidene fluoride polymer containing a structural unit derived from vinylidene fluoride and a structural unit derived from a compound represented by General Formula (1) or (2) described below. As described below, in the compound represented by General Formula (1) or (2), the carbon of a carbon-carbon double bond to which a carbonyl group is bonded is a quaternary carbon. Thus, when the compound and vinylidene fluoride are polymerized, the structural unit derived from vinylidene fluoride is less likely to deteriorate, and removal of hydrofluoric acid is less likely to progress. It is thus conceived that gelation and the like are less likely to occur.

Meanwhile, the above vinylidene fluoride polymer compound contains a carboxy group derived from the compound represented by General Formula (1) or (2). The carboxy group can bond to a polar group present on a surface

of an active material or a current collector. Thus, the binder containing the vinylidene fluoride polymer has a high adhesive strength to an active material and a current collector. That is, the binder is significantly effective as a raw material for mixture layers of various batteries. The vinylidene fluoride polymer and other components that are contained in the binder will be described below.

• Vinylidene fluoride polymer

The vinylidene fluoride polymer contains a structural unit derived from vinylidene fluoride and a structural unit derived from a compound represented by General Formula (1) or (2) described below. The vinylidene fluoride polymer may contain one type of a structure represented by General Formula (1) or (2) described below or may contain two or more types.

[Chem. 3]

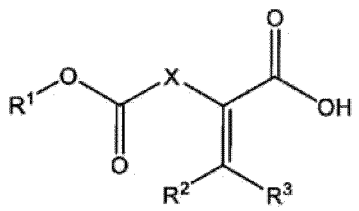
(1)
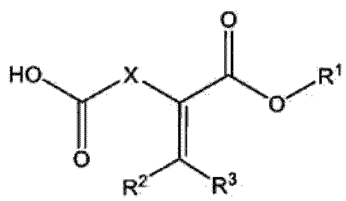
(2)

In the general formulas above, $R^1$ represents a hydrogen atom or an alkyl group having 1 or more and 5 or less carbons and preferably represents an alkyl group having 1 or more and 5 or less carbons. Examples of the alkyl group having 1 or more and 5 or less carbons include a straight-chain or branched alkyl group, and specific examples thereof include a methyl group, an ethyl group, a propyl group, an isopropyl group, an n-butyl group, a sec-butyl group, an isobutyl group, a t-butyl group, and a pentyl group. Among these, from the viewpoint of availability, a methyl group, an ethyl group, or a butyl group is preferred.

Furthermore, in the above general formulas, $R^2$ and $R^3$ each independently represent a hydrogen atom, a halogen atom, or an alkyl group having 1 or more and 5 or less carbons. Specific examples of the alkyl group having 1 or more and 5 or less carbons are the same as the specific examples described for the group represented by $R^1$ described above. Among these, a hydrogen atom is preferred because steric hindrance is less likely to occur during polymerization with vinylidene fluoride.

Furthermore, in the general formulas, X represents an alkylene group having 1 or more and 5 or less carbons and optionally having a substituent. Specific examples of the alkylene group include a methylene group and an ethylene group, and a methylene group is particularly preferred. Furthermore, the type of the substituent that may bond to the alkylene group is not particularly limited, and examples thereof include an alkyl group and a halogen atom.

Note that the molecular weight of the compound represented by General Formula (1) or (2) is preferably 500 or less, more preferably 100 or greater and 400 or less, even more preferably 100 or greater and 300 or less, and particularly preferably 100 or greater and 200 or less. When the molecular weight is 500 or less, copolymerization with vinylidene fluoride is facilitated.

Specific examples of the compound represented by General Formula (1) or (2) include itaconic acid, monomethyl itaconate, monoethyl itaconate, and monobutyl itaconate. Among these, from the viewpoint of polymerizability with vinylidene fluoride, a monomethyl itaconate or a monoethyl itaconate is preferred.

Furthermore, the proportion of the structural unit derived from the compound represented by General Formula (1) or (2) above with respect to an amount of all structural units in the vinylidene fluoride polymer is preferably 0.01 mol% or greater and 10.00 mol% or less, more preferably 0.05 mol% or greater and 3.00 mol% or less, and even more preferably 0.10 mol% or greater and 1.00 mol% or less. When the amount of the structural unit derived from the above compound is 0.01 mol% or greater, the adhesive strength between the binder (vinylidene fluoride polymer) and an active material and/or a current collector is enhanced. On the other hand, when the amount of the structural unit derived from the above compound is 10.00 mol% or less, the viscosity of the binder and/or the electrode mixture does not excessively increase, and the viscosity stability tends to be good. The amount of the structural unit derived from the compound represented by General Formula (1) or (2) can be determined by, for example, analysis by $^{19}F$-NMR, $^{1}H$-NMR, or the like.

Meanwhile, the amount of structural unit derived from vinylidene fluoride with respect to an amount of all structural units in the vinylidene fluoride polymer is preferably 90.00 mol% or greater and 99.99 mol% or less, more preferably 97.00 mol% or greater and 99.95 mol% or less, and even more preferably 99.00 mol% or greater and 99.90

mol% or less. When the amount of the structural unit derived from vinylidene fluoride is 90.00 mol% or greater, physical properties unique to vinylidene fluoride tend to be achieved. On the other hand, when the amount of the structural unit derived from vinylidene fluoride is 99.99 mol% or less, the amount of the structural unit derived from the compound represented by General Formula (1) or General Formula (2) above becomes relatively sufficient, and the adhesive strength between the vinylidene fluoride polymer and an active material and/or a current collector is enhanced. The amount of the structural unit derived from vinylidene fluoride in the vinylidene fluoride polymer can be determined by, for example, $^{19}$F-NMR analysis or the like.

Note that the vinylidene fluoride polymer may contain a structural unit derived from a compound other than vinylidene fluoride or the compound represented by General Formula (1) or (2) (also referred to as "additional compound") in some parts in the range that does not impair the object and effect of the present invention. The vinylidene fluoride polymer may contain one type of a structural unit derived from the additional compound, or may contain two or more types of the structural units derived from the additional compound(s). However, the total amount of the structural unit derived from vinylidene fluoride and the structural unit derived from the compound represented by General Formula (1) or (2) with respect to an amount of all structural units in the vinylidene fluoride polymer is preferably 90.01 mol% or greater, and more preferably 91.00 mol% or greater.

Examples of the additional compound include a fluorine-containing alkyl vinyl compound containing a vinyl group and a fluorine-containing alkyl group in a molecule. Examples of the fluorine-containing alkyl vinyl compound include vinyl fluoride, trifluoroethylene, tetrafluoroethylene, chlorotrifluoroethylene, hexafluoropropylene, fluoroalkyl vinyl ether, and perfluoroalkyl vinyl ether represented by perfluoromethyl vinyl ether.

Furthermore, within the range that does not impair the effect of the present invention, (meth)acrylic acid and (meth)acrylate represented by methyl (meth)acrylate may be contained; however, (meth)acrylic acid and (meth)acrylate are preferably not included.

Note that the vinylidene fluoride polymer may be obtained by subjecting vinylidene fluoride and the compound represented by General Formula (1) or (2) to block polymerization but more preferably to random polymerization. Furthermore, the random percentage of the structural unit derived from the compound represented by General Formula (1) or (2) is preferably 5% or greater and 100% or less, more preferably 7.5% or greater and 100% or less, and even more preferably 10% or greater and 100% or greater. The above random percentage represents a degree of randomness of structural units derived from the compound represented by General Formula (1) or (2) in a polymer chain of the vinylidene fluoride polymer and is a value determined by the following method based on the measurement results of $^{19}$F-NMR and $^{1}$H-NMR. When the random percentage is 5% or greater, uniformity of the polymer chain is enhanced, and excellent adhesiveness is exhibited by the compound represented by General Formula (1) or General Formula (2) above.

The random percentage of the vinylidene fluoride polymer in the present description can be determined by dividing the number of sequences [mol%] derived from the compound represented by General Formula (1) or (2) existing isolated in the polymer chain by the amount of the structural unit [mol%] derived from the compound represented by General Formula (1) or (2) in the polymer (the random percentage [%] = the number of sequences [mol%] derived from the compound represented by General Formula (1) or (2) existing isolated in the polymer chain/the amount of the structural unit [mol%] derived from the compound represented by General Formula (1) or (2) in the polymer $\times$ 100). The number of sequences derived from the compound represented by General Formula (1) or (2) existing isolated in the polymer chain can be determined by $^{19}$F-NMR spectrum, and the amount of the structural unit derived from the compound represented by General Formula (1) or (2) in the polymer can be determined by $^{1}$H-NMR spectrum.

Furthermore, the melting point of the vinylidene fluoride polymer is preferably 165°C or higher and 180°C or lower, more preferably 165°C or higher and 178°C or lower, and most preferably 165°C or higher and 175°C or lower. When the melting point of the vinylidene fluoride polymer is 165°C or higher, swelling is less likely to be caused by an electrolyte, and the resulting battery tends to have good performances. On the other hand, when the melting point is 180°C or lower, flexibility of an electrode to be formed tends to be good. The melting point of the vinylidene fluoride polymer can be determined by calorimetry using the differential scanning calorimeter (DSC). Specifically, the vinylidene fluoride polymer is heated from 30°C to 230°C at 10°C/min (the first heating), cooled from 230°C to 30°C at 10°C/min (the first cooling), and further heated from 30°C to 230°C at 10°C/min (the second heating). A melting peak is then specified by DSC. In the present description, the maximum melting peak temperature observed in the second heating is specified as a melting point of the vinylidene fluoride polymer.

A weight average molecular weight of the vinylidene fluoride polymer is preferably from 100000 or greater and 5000000 or less, more preferably 200000 or greater and 4000000 or less, and even more preferably 200000 or greater and 3000000 or less. The weight average molecular weight is a value measured by gel permeation chromatography (GPC) calibrated with polystyrene. When the weight average molecular weight of the vinylidene fluoride polymer is in the range described above, the vinylidene fluoride polymer is easily dissolved in a solvent.

The inherent viscosity of the vinylidene fluoride polymer is preferably 0.5 dL/g or greater and 8.0 dL/g or less, more preferably 1.0 dL/g or greater and 5.0 dL/g or less, and most preferably 1.0 dL/g or greater and 4.0 dL/g or less. When the inherent viscosity is 0.5 dL/g or greater, the adhesive strength between the binder (vinylidene fluoride polymer)

and an active material and/or a current collector is enhanced. On the other hand, when the inherent viscosity is 5.0 or less, a slurry viscosity does not become excessively high when an electrode slurry is prepared, and excellent workability is achieved. Note that the inherent viscosity ($\eta_i$) represents a logarithmic viscosity. First, the viscosity is measured by dissolving 80 mg of the vinylidene fluoride polymer in 20 mL of N,N-dimethylformamide, and using an Ubbelohde viscometer in a 30°C thermostatic bath. Then, based on the obtained value, calculation is performed by using the following equation.

$$\eta_i = (1/C) \cdot \ln(\eta/\eta_0)$$

In the equation, $\eta$ is a viscosity of the solution, $\eta_0$ is a viscosity of N,N-dimethylformamide alone, which is a solvent, C is a concentration of the vinylidene fluoride polymer in the solution, that is, 0.4 g/dL.

Note that the vinylidene fluoride polymer can be prepared by subjecting vinylidene fluoride, the compound represented by (1) or (2) above and, optionally, an additional compound to copolymerization by a known method. Examples of the method for copolymerizing them include suspension polymerization, emulsion polymerization, and solution polymerization. However, from the viewpoint of ease in obtaining a binder having a high adhesive strength and from the viewpoint of less impurity, suspension polymerization is preferred.

• Nonaqueous solvent

The binder may be made only with the vinylidene fluoride polymer described above but may contain a nonaqueous solvent, as necessary.

When the binder contains a nonaqueous solvent, the vinylidene fluoride polymer can be dissolved or dispersed, and the binder can be made in a liquid state.

Examples of the nonaqueous solvent include a solvent having polarity (polar solvent). Examples of the polar solvent include amide compounds, such as dimethylformamide, N,N-dimethylacetamide, and N-methylpyrrolidone; alcohols, such as methanol, ethanol, isopropyl alcohol, 2-ethyl-1-hexanol, 1-nonanol, lauryl alcohol, and tripropylene glycol; amine compounds, such as o-toluidine, m-toluidine, and p-toluidine; 1-ethyl -3-methylimidazolium bis(trifluoromethylsulfonyl) imide; lactones, such as $\gamma$-butyrolactone and $\delta$-butyrolactone; and sulfoxide-sulfone compounds, such as dimethyl sulfoxide and sulfolane. The binder may contain one nonaqueous solvent only or two or more nonaqueous solvents.

The amount of the nonaqueous solvent in the binder is preferably 400 parts by mass or greater and 5000 parts by mass or less, and more preferably 500 parts by mass or greater and 5000 parts by mass or less, with respect to 100 parts by mass of the vinylidene fluoride polymer. When the amount of the nonaqueous solvent in the binder is in the range described above, the vinylidene fluoride polymer can be uniformly dispersed or dissolved in the nonaqueous solvent.

• Other components

The binder may further contain an additional resin, such as an acrylic resin; a filler, such as an inorganic filler; an additive of various types; and/or the like, in the range that does not impair the object and effect of the present invention.

2. Electrode mixture

The binder described above and an active material (positive electrode active material or negative electrode active material) can be mixed to form an electrode mixture for producing an electrode of a non-aqueous secondary battery. The electrode mixture may further contain a conductive auxiliary, a solvent, other additives, and the like.

The binder exhibits high adhesiveness to an active material and the like. Thus, the proportion of the solid content derived from the binder (total amount excluding components that are volatilized during curing) with respect to the total amount of the solid content derived from the binder, the active material, and the conductive auxiliary can be made relatively small and, for example, can be made to 0.2 mass% or greater and 20 mass% or less. The amount of the solid content derived from the binder is more preferably 0.2 mass% or greater and 10 mass% or less, and even more preferably 0.2 mass% or greater and 4 mass% or less.

Furthermore, the binder described above is less likely to cause viscosity increase or gelation or the like of the electrode mixture even when mixed with an active material containing a large amount of a base. Thus, various materials can be used as an active material for an electrode mixture. The active material is not particularly limited, and any known active material for a negative electrode (negative electrode active material) or active material for a positive electrode (positive electrode active material) can be used.

Examples of the negative electrode active material include a carbon material, such as artificial graphite, natural graphite, non-graphitizable carbon, graphitizable carbon, activated carbon, and a material obtained by carbonizing a phenolic resin, a pitch, or the like by heat treatment; metal and metal alloy materials, such as Cu, Li, Mg, B, Al, Ga, In, Si, Ge, Sn, Pb, Sb, Bi, Cd, Ag, Zn, Hf, Zr, and Y; and metal oxides, such as GeO, $GeO_2$, SnO, $SnO_2$, PbO, and $PbO_2$. Furthermore, the negative electrode active material may be a negative electrode active material obtained by applying a coating on a surface of the carbon material, the metal and metal alloy materials, or the metal oxides described above. Note that the negative electrode active material may be a commercially available product.

On the other hand, examples of the positive electrode active material include a lithium-based positive electrode active material containing lithium. Examples of the lithium-based positive electrode active material include: complex metal chalcogenide compounds represented by the general formula $LiMY_2$ (where M is at least one type of transition metal or two or more types of transition metals such as Co, Ni, Fe, Mn, Cr, or V, and Y is a chalcogen element such as O or S) such as $LiCoO_2$ or $LiNi_xCO_{1-x}O_2$ ($0 < x \leq 1$); complex metal oxides having a spinel structure such as $LiMn_2O_4$; olivine-type lithium compounds such as $LiFePO_4$ and $LiFeMnPO_4$; and $LiNi_xCo_yAl_{1-x-y}O_2$ ($0 < x + y \leq 1$). Furthermore, the positive electrode active material may be a positive electrode active material obtained by applying a coating on a surface of the compound described above. Furthermore, the positive electrode active material may be a commercially available product.

The amount of the active material contained in the electrode mixture is appropriately selected based on the use of the electrode mixture, and the amount is preferably 40 mass% or greater and 99.9 mass% or less with respect to the total amount of the solid content derived from the binder, the active material, and the conductive auxiliary. When the content of the active material is in the range described above, a sufficient charge/discharge capacity can be obtained and good battery performance can be readily obtained, for example.

In addition, the conductive auxiliary contained in the electrode mixture is not particularly limited as long as it is a compound that can increase electrical conductivity between the active materials or between the active material and the current collector. Examples of the conductive auxiliary include acetylene black, Ketjen Black, carbon black, graphite powder, graphene, carbon nanofibers, carbon nanotubes, and carbon fibers.

The amount of the conductive auxiliary contained in the electrode mixture is appropriately selected based on the type of conductive auxiliary and the like. From the viewpoint of increasing both the improvement of the electrical conductivity and the dispersibility of the conductive auxiliary, the amount of the conductive auxiliary is preferably 0.1 mass% or greater and 15 mass% or less, more preferably 0.1 mass% or greater and 7 mass% or less, and even more preferably 0.1 mass% or greater and 5 mass% or less, with respect to the total amount of the solid content derived from the binder, the active material, and the conductive auxiliary.

The electrode mixture may contain a solvent and/or the like different from the nonaqueous solvent contained in the binder described above. The solvent can be selected from the nonaqueous solvents that can be contained in the binder described above.

The total amount of the solvent (including the amount of the nonaqueous solvent in the binder) in the electrode mixture is not particularly limited but typically is preferably 20 parts by mass or greater and 150 parts by mass or less per 100 parts by mass of the active material described above.

The electrode mixture may further contain a dispersant, an adhesion aid, a thickener, and/or the like, and a known compound can be used for these. The amount thereof is not particularly limited as long as the object and effects of the present invention are not impaired, but the amount is preferably 15 mass% or less with respect to the total amount of the solid content derived from the binder and the active material.

Furthermore, the electrode mixture may further contain an additive, such as a phosphorus compound, a sulfur compound, an organic acid, an amine compound, and a nitrogen compound such as an ammonium compound; an organic ester, a silane-based, titanium-based, and aluminum-based coupling agent of various types; and/or a vinylidene fluoride polymer other than the vinylidene fluoride polymer described above, and a resin, such as poly(tetrafluoroethylene) (PTFE), styrene-butadiene rubber (SBR), and polyacrylonitrile (PAN). These are not particularly limited as long as the object and effects of the present invention are not impaired, but the amount is preferably 15 mass% or less with respect to the total amount of the solid content derived from the binder and the active material.

The electrode mixture may be prepared by mixing all the components at once, or may be prepared by mixing some of the components first and then mixing the remaining components.

A viscosity of the electrode mixture is not particularly limited as long as it can prevent dripping, uneven application, and delay in drying after application when the electrode mixture is applied, thereby forming a mixture layer, and the operability of mixture layer preparation and the coatability are good. Typically, the viscosity (slurry viscosity) measured at 20°C at a rotational speed of 6 rpm using a B-type viscometer is preferably 100 mPa·s or greater and 100000 mPa·s or less, more preferably 1000 mPa·s or greater and 80000 mPa·s or less, and most preferably 2000 mPa·s or greater and 70000 mPa·s or less. The viscosity (slurry viscosity) of the electrode mixture in the present description is a value measured at 2 minutes after start of the rotation of the B-type rotational viscometer.

3. Electrode

The electrode mixture described above can be used in the formation of mixture layers of electrodes of various non-aqueous electrolyte secondary batteries. An electrode for a non-aqueous electrolyte secondary battery includes, for example, a current collector and a mixture layer disposed on the current collector. The electrode mixture described above can be used in the formation of the mixture layer.

• Current collector

The current collector is a terminal for extracting electricity. A material for each of the current collectors is not particularly limited, and metal foil, metal mesh, or the like of aluminum, copper, iron, stainless steel, steel, nickel, titanium, or the like can be used. In addition, the current collector may be one produced by forming a layer containing carbon black or the like on a surface of another medium, or one produced by applying the metal foil, metal mesh, or the like on a surface of a medium.

• Mixture layer

The mixture layer is a layer obtained by applying the electrode mixture described above onto the current collector, and solidifying the electrode mixture. That is, the mixture layer contains a solidified material of the electrode mixture. The mixture layer may be formed only on one surface of the current collector or may be formed on both surfaces.
The mixture layer contains at least the components contained in the electrode mixture described above, that is, the solid content derived from the binder and the active material, and may further contain, optionally, a conductive auxiliary and various additives such as a dispersant, an adhesion aid, and a thickener. These additives may be the same as those described for the electrode mixture.
Here, a thickness of the mixture layer is not particularly limited, but is preferably 1 μm or greater and 1000 μm or less in one example. In addition, the areal weight of the mixture layer formed on one surface of the current collector is not particularly limited and can be any areal weight but is preferably 50 $g/m^2$ or greater and 1000 $g/m^2$ or less, and more preferably 100 $g/m^2$ or greater and 500 $g/m^2$ or less, in one example.
The mixture layer can be formed by applying the electrode mixture described above onto the current collector and curing the electrode mixture.
The method of applying the electrode mixture is not particularly limited, and a doctor blade method, a reverse roll method, a comma bar method, a gravure method, an air knife method, a die coating method, a dip coating method, or the like can be employed.
After the application of the electrode mixture, the electrode mixture is heated at any temperature to dry the nonaqueous solvent. In one example, a drying temperature is preferably 60°C or higher and 500°C or lower, and more preferably 80°C or higher and 200°C or lower. The heating may be performed a plurality of times at different temperatures. The solvent in the mixture may be dried under atmospheric pressure, increased pressure, or reduced pressure. After the drying, a heat treatment may be further performed.
After the application and drying of the electrode mixture, press treatment may be further performed. Performing the press treatment can improve the electrode density. In one example, a pressing pressure is preferably 1 kPa or greater and 10 GPa or less.

4. Non-aqueous electrolyte secondary battery

As described above, the binder and the mixture can be used in electrodes of various non-aqueous electrolyte secondary batteries, but may be used for the formation of other layers of the non-aqueous electrolyte secondary battery.

[Examples]

Hereinafter, specific examples of the present invention will be described together with comparative examples, but the present invention is not limited to these.

(Measurement method and evaluation method of physical properties)

For each of the following Examples and Comparative Examples, the inherent viscosity of the vinylidene fluoride polymer, the amount of an introduced comonomer of the vinylidene fluoride polymer, the random percentage, and the melting point were measured by the following methods. Furthermore, the slurry viscosity of the binder and the peel strength of the mixture layer were measured as follows.

• Inherent viscosity

The inherent viscosity of the vinylidene fluoride polymer was measured as follows. First, the viscosity was measured by dissolving 80 mg of the vinylidene fluoride polymer in 20 mL of N,N-dimethylformamide, and using an Ubbelohde viscometer in a 30°C thermostatic bath. Based on the obtained value, the inherent viscosity ($\eta_i$) of the vinylidene fluoride polymer was then calculated based on the following equation.

$$\eta_i = (1/C) \cdot \ln(\eta/\eta_0)$$

In the equation, $\eta$ is a viscosity of the solution, $\eta_0$ is a viscosity of N,N-dimethylformamide alone, which is a solvent, C is a concentration of the vinylidene fluoride polymer in the solution, that is, 0.4 g/dL.

• Amount of introduced comonomer and random percentage

The amount of the introduced comonomer and the random percentage of the vinylidene fluoride polymer were determined by $^1$H-NMR and $^{19}$F-NMR. Specifically, $^1$H-NMR and $^{19}$F-NMR analyses of the vinylidene fluoride polymer dissolved in DMSO-$d_6$ were performed by using a nuclear magnetic resonance spectrometer (NMR, available from JEOL Ltd., JNM-ECZ600R/S1, frequency: 600 MHz).

Based on the obtained $^1$H-NMR spectrum, among peaks derived from the structural units (monomers) of the vinylidene fluoride polymer, an integrated intensity of a peak derived from the monomer other than the vinylidene fluoride (hereinafter, also referred to as "comonomer") and an integrated intensity of a peak derived from the vinylidene fluoride (hereinafter, also referred to as "VDF") were each determined. Then, based on the ratio of the integrated intensity of the peak derived from the comonomer with respect to the integrated intensity of the peaks derived from all the structural units in the vinylidene fluoride polymer (total of the integrated intensity of the peak derived from the comonomer and the integrated intensity of the peak derived from the VDF), the amount (mol%) of the introduced monomer (comonomer) other than the vinylidene fluoride among all the structural units of the vinylidene fluoride polymer was calculated.

Furthermore, in the obtained $^{19}$F-NMR spectrum, when the peak derived from a normal bond of the vinylidene fluoride polymer is used as a base peak (-91.6 ppm), $CF_2$ derived from the VDF adjacent to the monomer (comonomer) other than the VDF was observed as a peak around -94 ppm. The integrated intensity of this peak around -94 ppm was divided by the integrated value of all the peaks obtained in $^{19}$F-NMR and then divided by 2 to calculate the number of sequences (mol%) derived from the comonomer present isolated in the polymer chain as described in the following (Equation 1):

The number of sequences (mol%) derived from comonomer present isolated = (integrated intensity of peak around -94 ppm)/(integrated value of all peaks)/2 × 100

Then, the calculated number of sequences (mol%) derived from the monomer (comonomer) other than the vinylidene fluoride present isolated was divided by the amount of introduced comonomer (mol%) in all the structural units of the vinylidene fluoride polymer and then multiplied by 100 to determine the random percentage as described in the following (Equation 2):

Random percentage (%) = number of sequences derived from comonomer present isolated (mol%)/amount of introduced comonomer in all the structural units of vinylidene fluoride polymer (mol%) × 100

• Melting point

The melting point of the vinylidene fluoride polymer was determined by calorimetry using a differential scanning calorimeter (DSC). Specifically, the vinylidene fluoride polymer was heated from 30°C to 230°C at 10°C/min (first heating), cooled from 230°C to 30°C at 10°C/min (first cooling), and further heated from 30°C to 230°C at 10°C/min (second heating), and a melting peak was determined by a DSC. And then, the maximum melting peak temperature observed in the second heating was specified as a melting point of the vinylidene fluoride polymer.

• Slurry viscosity

The slurry viscosity of the electrode mixture prepared in Examples and Comparative Examples was measured as described below. The slurry viscosity was measured as a viscosity at 2 minutes after start of the rotation by using a B-type viscometer (TVB-10M, available from Toki Sangyo Co., Ltd., spindle No. M4) at 20°C and a rotational speed of 6 rpm.

Note that, for the slurry viscosity, each of the value right after the production of the electrode mixture and the value measured at 7 days after the production was measured. Specifically, the viscosity of the electrode mixture right after the production of the electrode mixture was measured. Then, the electrode mixture was stored at room temperature of 20°C and in an atmosphere with a dew point of -30°C or lower for 7 days. Thereafter, the slurry viscosity of the electrode mixture was measured. The ratio of the slurry viscosity after the storage to the slurry viscosity right after the production (slurry viscosity after storage/slurry viscosity right after production) was used as the slurry viscosity ratio.

• Peel strength

The electrode mixture prepared in each of Examples and Comparative Examples was applied on aluminum foil having a thickness of 15 μm by using a bar coater and dried at 110°C for 30 minutes, and thus a one-side coated electrode having an areal weight of 300 g/$m^2$ was obtained. The obtained one-side coated electrode was cut to a length of 50 mm and a width of 20 mm, and the peel strength between the aluminum foil and the mixture layer was evaluated. Specifically, a top face of the formed mixture layer and a thick sheet of plastic (made of acrylic resin; thickness: 5 mm) were adhered. Then, a 90 degree peel test was conducted in accordance with JIS K 6854 using a tensile tester (Universal Testing Instrument Model: STA-1150, available from Orientec Co., Ltd.) at a head speed of 10 mm/min.

(Example 1)

Preparation of binder

In an autoclave with an internal volume of 2 liters, 1240 g of ion-exchanged water as a dispersing medium, 0.6 g of a cellulose-based suspension agent (Metolose SM-100, available from Shin-Etsu Chemical Co., Ltd.), 0.4 g of monoethyl itaconate, 4 g of a polymerization initiator (diisopropyl peroxy dicarbonate HFE-347pc-f solution with a concentration of 50 mass%), and 400 g of vinylidene fluoride were charged, and the temperature was increased to 45°C over 2 hours while the mixture was agitated. While the temperature was maintained at 45°C, from 4 hours after the start of the temperature increase, 2.52 g, in terms of solute, of monoethyl itaconate (hereinafter, also referred to as "EI") solution with a concentration of 5 mass% (solvent: water/methanol; mass ratio: 1:1) was added over 4 hours. The polymerization was stopped at the same time as completion of the addition of the monoethyl itaconate solution, and was performed for a total of 8 hours from the start of the temperature increase.

After the completion of the polymerization, the slurry containing the vinylidene fluoride polymer was subjected to water washing, removal of the water, and drying. Accordingly, powder of the vinylidene fluoride polymer was obtained. The yield of the obtained vinylidene fluoride polymer was 81%, and the inherent viscosity $\eta_i$ was 1.66 dL/g. Hereinafter, the obtained powder of the vinylidene fluoride polymer was used as a binder. The binder was dissolved in N-methyl-2-pyrrolidone (hereinafter, also referred to as "NMP") in a manner that the concentration became 8 mass% and used as a binder solution.

[Preparation of electrode mixture]

As conductive auxiliaries, 1 part by mass of carbon black (Super-P, available from Timcal) and NMP were charged in a polyethylene cup, and kneaded (2000 rpm, 1 minute) by using AR-310, available from Thinky Corporation. Furthermore, the binder solution in an amount that made the binder concentration in the binder solution 1 part by mass was added and kneaded similarly (2000 rpm, 1 minute), and thus a paste was made. To this, 100 parts by mass of nickel-cobalt-aluminum ternary lithium-based composite metal oxide (Ni content: 78%; Co content: 19%; Al content: 3%; specific surface area: 0.38 $m^2$/g; average particle size $D_{50}$: 12.2 μm) and NMP were added and kneaded (1500 rpm, 1 minute). The mixture was naturally cooled until the temperature of the mixed material heated by the kneading became room temperature, and then further kneaded at 1500 rpm for 3 minutes. This operation was performed twice, and a positive electrode mixture in a slurry form was prepared. Note that the added amount of the NMP was appropriately adjusted based on the inherent viscosity of the vinylidene fluoride polymer, and the adjustment was performed in a manner that the viscosity (slurry viscosity) right after the electrode mixture production became 20000 to 70000 mPa·s when measurement was performed at 20°C at a rotational speed of 6 rpm for 2 minutes by using a B-type viscometer. The concentration of the solid content with respect to the total weight of this mixture (hereinafter, solid content concentration) was 83 mass%.

[Production of electrode]

Each of the obtained electrode mixtures was applied onto a current collector (aluminum foil having a thickness of 15 $\mu$m) with a bar coater. This was dried in a nitrogen atmosphere at 110°C for 30 minutes by using a thermostat bath, and thus an electrode having a dried mixture areal weight of 300 g/$m^2$ was produced.

[Example 2]

A binder was obtained by the same method as in Example 1 except for changing the charged amount of the polymerization initiator (diisopropyl peroxy dicarbonate HFE-347pc-f solution with a concentration of 50 mass%) to 2.6 g, changing the initially charged amount of the monoethyl itaconate to 0.2 g, and adding 2.2 g, in terms of solute, of the monoethyl itaconate solution with a concentration of 5 mass% (solvent: water/methanol; mass ratio: 1:1) over 4 hours from 3 hours after the start of the temperature increase. The yield of the obtained vinylidene fluoride polymer was 64%, and the inherent viscosity $\eta_i$ was 2.02 dL/g. The binder was dissolved in NMP in a manner that the concentration became 7 mass% and used as a binder solution. The electrode mixture and the electrode were produced by the same method as in Example 1. The solid content concentration of the electrode mixture was 81 mass%.

[Example 3]

In an autoclave with an internal volume of 2 liters, 1200 g of dispersing medium (ion-exchanged water), 0.4 g of a cellulose-based suspension agent (Metolose SM-100, available from Shin-Etsu Chemical Co., Ltd.), 0.2 g of monomethyl itaconate (hereinafter, also referred to as "MI"), 4 g of a polymerization initiator (t-butyl peroxypivalate HFE-347pc-f solution with a concentration of 50 wt%), and 400 g of vinylidene fluoride were charged, and the temperature was increased to 55°C over 2 hours while the mixture was agitated. While the temperature was maintained at 55°C, from 2.5 hours after the start of the temperature increase, 3.16 g, in terms of solute, of monomethyl itaconate solution with a concentration of 5 mass% was added over 7.5 hours. The polymerization was stopped at the same time as completion of the addition of the monomethyl itaconate solution, and was performed for a total of 10 hours from the start of the temperature increase. The obtained polymer slurry was treated by the same method as in Example 1, and thus a binder was obtained. The yield of the obtained vinylidene fluoride polymer was 66%, and the inherent viscosity $\eta_i$ was 1.93 dL/g. The binder was dissolved in NMP in a manner that the concentration became 7 mass% and used as a binder solution. The electrode mixture and the electrode were produced by the same method as in Example 1. The solid content concentration of the electrode mixture was 81 mass%.

[Example 4]

A liquid mixture was prepared in the same manner as in Example 1 except for changing the charged amount of the ion-exchanged water to 1140 g, adding a charged amount of 0.4 g of monomethyl itaconate in place of the monoethyl itaconate, and changing the charged amount of the polymerization initiator (diisopropyl peroxy dicarbonate HFE-347pc-f solution with a concentration of 50 mass%) to 2.2 g, and the temperature was increased while the liquid mixture was agitated. While the temperature was maintained at 45°C, from 4 hours after the start of the temperature increase, 3.08 g, in terms of solute, of monomethyl itaconate solution with a concentration of 5 mass% (solvent: water/methanol; mass ratio: 1:1) was added over 9 hours. Polymerization was terminated at the point when the pressure in the system decreased to 1.5 MPa and was performed for a total of 16 hours from the start of temperature increase. The obtained slurry of the vinylidene fluoride polymer was treated by the same method as in Example 1, and thus a binder was obtained. The yield of the obtained vinylidene fluoride polymer was 94%, and the inherent viscosity $\eta_i$ was 2.44 dL/g. The binder was dissolved in NMP in a manner that the concentration became 7 mass% and used as a binder solution. The electrode mixture and the electrode were produced by the same method as in Example 1. The solid content concentration of the electrode mixture was 80 mass%.

[Comparative Example 1]

In an autoclave with an internal volume of 2 liters, 1280 g of a dispersing medium (ion-exchanged water), 0.2 g of a cellulose-based suspension agent (Metolose SM-100, available from Shin-Etsu Chemical Co., Ltd.), 0.2 g of mono(acryloyloxyethyl) succinate (hereinafter, also referred to as "AES"), 4 g of a polymerization initiator (diisopropyl peroxy dicarbonate HFE-347pc-f solution with a concentration of 50 mass%), and 400 g of vinylidene fluoride were charged, and the temperature was increased to 45°C over 2 hours while the mixture was agitated. While the temperature

was maintained at 45°C, right after the temperature increase, 3.8 g, in terms of solute, of mono(acryloyloxyethyl) succinate solution with a concentration of 5 mass% was added over 1.5 hours. Polymerization was terminated at the point when the pressure in the system decreased to 1.86 MPa and was performed for a total of 4.2 hours from the start of temperature increase. The obtained slurry of the vinylidene fluoride polymer was treated by the same method as in Example 1, and thus a binder was obtained. The yield of the obtained vinylidene fluoride polymer was 92%, and the inherent viscosity $\eta_i$ was 1.82 dL/g. The binder was dissolved in NMP in a manner that the concentration became 8 mass% and used as a binder solution. The electrode mixture and the electrode were produced by the same method as in Example 1. The solid content concentration of the electrode mixture was 83 mass%.

[Comparative Example 2]

A binder was obtained by the same method as in Comparative Example 1 except for changing the charged amount of the polymerization initiator (diisopropyl peroxy dicarbonate HFE-347pc-f solution with a concentration of 50 wt%) to 2.72 g. The yield of the obtained vinylidene fluoride polymer was 92%, and the inherent viscosity $\eta_i$ was 2.43 dL/g. The binder was dissolved in NMP in a manner that the concentration became 7 mass% and used as a binder solution. The electrode mixture and the electrode were produced by the same method as in Example 1. The solid content concentration of the electrode mixture was 80 mass%.

[Comparative Example 3]

In an autoclave with an internal volume of 2 liters, 900 g of dispersing medium (ion-exchanged water), 0.4 g of a cellulose-based suspension agent (Metolose SM-100, available from Shin-Etsu Chemical Co., Ltd.), 0.2 g of monomethyl maleate (hereinafter, also referred to as "MMM"), 2 g of a polymerization initiator (t-butyl peroxypivalate HFE-347pc-f solution with a concentration of 50 mass%), and 400 g of vinylidene fluoride were charged, and the temperature was increased to 55°C over 2 hours while the mixture was agitated. While the temperature was maintained at 55°C, from 2.5 hours after the start of the temperature increase, 2.76 g, in terms of solute, of monomethyl maleate solution with a concentration of 5 mass% was added over 9.8 hours. The polymerization was stopped at the same time as completion of the addition of the monomethyl maleate solution, and was performed for a total of 12.2 hours from the start of the temperature increase. The obtained slurry of the vinylidene fluoride polymer was treated by the same method as in Example 1, and thus a binder was obtained. The yield of the obtained vinylidene fluoride polymer was 47%, and the inherent viscosity $\eta_i$ was 2.06 dL/g. The binder was dissolved in NMP in a manner that the concentration became 7 mass% and used as a binder solution. The electrode mixture and the electrode were produced by the same method as in Example 1. The solid content concentration of the electrode mixture was 81 mass%.

[Table 1]

| | | Example 1 | Example 2 | Example 3 | Example 4 | Comparative Example 1 | Comparative Example 2 | Comparative Example 3 |
|---|---|---|---|---|---|---|---|---|
| Monomer other than VDF (Comonomer) | | EI | EI | MI | MI | AES | AES | MMM |
| Molecular weight of comonomer | | 158 | 158 | 144 | 144 | 216 | 216 | 130 |
| Charged amount of comonomer | mass% | 0.73 | 0.60 | 0.84 | 0.87 | 0.99 | 0.99 | 0.74 |
| | mol% | 0.30 | 0.24 | 0.37 | 0.39 | 0.28 | 0.28 | 0.36 |
| Concentration of added comonomer solution | g/L | 5 | 5 | 5 | 2 | 5 | 5 | 5 |
| Polymerization temperature | °C | 45 | 45 | 55 | 45 | 45 | 45 | 55 |
| Yield | % | 81 | 64 | 66 | 94 | 92 | 92 | 47 |

(continued)

| | | Example 1 | Example 2 | Example 3 | Example 4 | Comparative Example 1 | Comparative Example 2 | Comparative Example 3 |
|---|---|---|---|---|---|---|---|---|
| Introduced amount of comonomer (NMR value) | mol% | 0.16 | 0.24 | 0.36 | 0.24 | 0.24 | 0.23 | 0.42 |
| Random percentage | % | 8.5 | 9.5 | 10.5 | 10 | 13 | 13 | - |
| Melting point | °C | 170 | 170 | 166 | 168 | 171 | 170 | 165 |
| Inherent viscosity | dL/g | 1.66 | 2.02 | 1.93 | 2.44 | 1.82 | 2.43 | 2.06 |
| Peel strength | gf/mm | 3.01 | 3.86 | 4.34 | 4.56 | 3.77 | 3.91 | 4.75 |
| Slurry viscosity ratio | - | 2.57 | 1.9 | 1.03 | 2.35 | Measurement not possible due to gelation | Measurement not possible due to gelation | Measurement not possible due to gelation |
| EI: Monoethyl itaconate, MI: Monomethyl itaconate<br>AES: Mono(acryloyloxyethyl) succinate, MMM: Monomethyl maleate | | | | | | | | |

As presented in the table above, for the vinylidene fluoride polymer obtained by copolymerizing the monoethyl itaconate (EI) or monomethyl itaconate (MI) having a structure represented by General Formula (1) and vinylidene fluoride, gelation did not occur when the vinylidene fluoride polymer was mixed with the active material, and almost no change in the viscosity occurred even after 7 days had passed (Examples 1 to 4). On the other hand, in a case where mono(acryloyloxyethyl) succinate or monomethyl maleate and vinylidene fluoride were copolymerized, gelation occurred, and viscosity measurement was not possible 7 days later.

Furthermore, a high peel strength was achieved between the aluminum and the mixture layer made of the electrode mixture containing the vinylidene fluoride polymer obtained by copolymerizing the monoethyl itaconate (EI) or monomethyl itaconate (MI) having a structure represented by General Formula (1) and vinylidene fluoride, and the high adhesive strength was as high as a known mixture layer (comparison between Examples 1 to 4 and Comparative Examples 1 to 3).

The present application claims priority from the Japanese patent application No. 2021-212677 filed on December 27, 2021. The contents described in the specification of the foregoing application are all incorporated in the specification of the present application by reference.

[Industrial Applicability]

According to the present invention, a binder for a non-aqueous electrolyte secondary battery that undergoes less deterioration or less viscosity increase in a case where the binder is mixed with an active material containing a large amount of a base or the like can be obtained. The binder for a non-aqueous electrolyte secondary battery is very useful for producing various batteries.

## Claims

**1.** A binder for a non-aqueous electrolyte secondary battery, comprising a vinylidene fluoride polymer,

the vinylidene fluoride polymer comprising a structural unit derived from vinylidene fluoride and a structural unit derived from a compound represented by General Formula (1) or (2) and
having a melting point of 165°C or higher:

[Chem. 1]

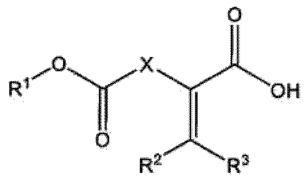 (1) 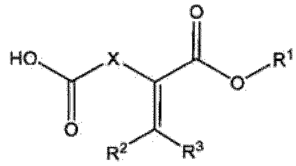 (2)

where in General Formula (1) or (2), $R^1$ represents a hydrogen atom or an alkyl group having 1 or more and 5 or less carbons, and $R^2$ and $R^3$ each independently represent a hydrogen atom, a halogen atom, or an alkyl group having 1 or more and 5 or less carbons, and X represents an alkylene group having 1 or more and 5 or less carbons and optionally having a substituent.

**2.** The binder for a non-aqueous electrolyte secondary battery according to claim 1, wherein, in the compound represented by General Formula (1) or (2), $R^1$ in the general formulas represents an alkyl group having 1 or more and 5 or less carbons, and $R^2$ and $R^3$ each independently represent a hydrogen atom.

**3.** The binder for a non-aqueous electrolyte secondary battery according to claim 1 or 2, wherein

a molecular weight of the compound represented by General Formula (1) or (2) is 500 or less, and
X in the general formulas is a methylene group.

**4.** The binder for a non-aqueous electrolyte secondary battery according to any one of claims 1 to 3, wherein the vinylidene fluoride polymer contains 90 mol% or greater of the structural unit derived from vinylidene fluoride with respect to all structural units.

**5.** The binder for a non-aqueous electrolyte secondary battery according to any one of claims 1 to 4, wherein a random percentage of the compound represented by Formula (1) or (2) in the vinylidene fluoride polymer is 5% or greater.

**6.** The binder for a non-aqueous electrolyte secondary battery according to any one of claims 1 to 5, further comprising a nonaqueous solvent.

**7.** An electrode mixture, comprising:

the binder for a non-aqueous electrolyte secondary battery according to any one of claims 1 to 6, and
an active material.

**8.** An electrode, comprising a solidified material of the electrode mixture according to claim 7.

**9.** A battery, comprising the electrode according to claim 8.

**INTERNATIONAL SEARCH REPORT**

International application No.
**PCT/JP2022/044955**

**A. CLASSIFICATION OF SUBJECT MATTER**

***H01M 4/62***(2006.01)i; ***C08F 214/22***(2006.01)i
FI: H01M4/62 Z; C08F214/22

According to International Patent Classification (IPC) or to both national classification and IPC

**B. FIELDS SEARCHED**

Minimum documentation searched (classification system followed by classification symbols)

H01M4/62; C08F214/22

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | CN 112538130 A (CHANGSHU 3F FLUOROCHEMICAL INDUSTRY CO., LTD.) 23 March 2021 (2021-03-23)<br>claims 1, 4, 10, paragraph [0025], examples | 1-4, 7-9<br>5-6 |
| Y | WO 2012/090876 A1 (KUREHA CORP.) 05 July 2012 (2012-07-05)<br>claims 1, 7-8, paragraphs [0081]-[0088] | 5–6 |
| Y | WO 2012/049967 A1 (KUREHA CORP.) 19 April 2012 (2012-04-19)<br>claims 1, 8, paragraphs [0031], [0061]-[0065], [0092] | 5–6 |
| A | JP 6768176 B2 (KUREHA CORP.) 14 October 2020 (2020-10-14)<br>entire text | 1-9 |
| A | WO 2020/054546 A1 (KUREHA CORP.) 19 March 2020 (2020-03-19)<br>entire text | 1-9 |
| A | JP 2016-106354 A (JSR CORP.) 16 June 2016 (2016-06-16)<br>entire text | 1-9 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 January 2023** | **14 February 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2022/044955**

**C. DOCUMENTS CONSIDERED TO BE RELEVANT**

| Category* | Citation of document, with indication, where appropriate, of the relevant passages | Relevant to claim No. |
|---|---|---|
| A | WO 2019/208792 A1 (MURATA MANUFACTURING CO., LTD.) 31 October 2019 (2019-10-31) entire text | 1-9 |
| A | JP 2010-160983 A (NISSAN MOTOR CO., LTD.) 22 July 2010 (2010-07-22) entire text | 1-9 |

Form PCT/ISA/210 (second sheet) (January 2015)

**INTERNATIONAL SEARCH REPORT**
**Information on patent family members**

International application No.
**PCT/JP2022/044955**

| Patent document cited in search report | Publication date (day/month/year) | Patent family member(s) | Publication date (day/month/year) |
|---|---|---|---|
| CN 112538130 A | 23 March 2021 | (Family: none) | |
| WO 2012/090876 A1 | 05 July 2012 | US 2013/0273424 A1<br>claims 1, 7-8, paragraphs [0080]-[0087]<br>EP 2660254 A1<br>CN 103261247 A<br>KR 10-2013-0109185 A | |
| WO 2012/049967 A1 | 19 April 2012 | CN 103155247 A<br>claims 1, 8, paragraphs [0038], [0070]-[0074], [0104]<br>KR 10-2013-0054467 A | |
| JP 6768176 B2 | 14 October 2020 | US 2021/0210783 A1<br>entire text<br>WO 2019/230075 A1<br>EP 3806190 A1<br>CN 112088445 A<br>KR 10-2020-0142097 A | |
| WO 2020/054546 A1 | 19 March 2020 | CN 112585795 A<br>entire text<br>KR 10-2021-0043712 A | |
| JP 2016-106354 A | 16 June 2016 | JP 2014-225465 A<br>entire text<br>US 2016/0079007 A1<br>entire text<br>JP 5673987 B1<br>WO 2014/157715 A1<br>CN 105103349 A<br>KR 10-2015-0135207 A | |
| WO 2019/208792 A1 | 31 October 2019 | US 2021/0043941 A1<br>entire text<br>CN 112042030 A | |
| JP 2010-160983 A | 22 July 2010 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5797206 B
- JP 2021212677 A